# EUROPEAN PATENT SPECIFICATION

(11) **EP 3 082 342 B1**
(45) Date of publication and mention of the grant of the patent: **27.11.2019**
(21) Application number: 15201328.0
(22) Date of filing: 18.12.2015
(51) Int. Cl.: H04N 21/443, H04N 21/4363, H04N 21/442

(54) **IMAGE PROCESSING SYSTEM, IMAGE DISPLAY APPARATUS, IMAGE TRANSMISSION APPARATUS, METHOD FOR DRIVING IMAGE DISPLAY APPARATUS, AND METHOD FOR DRIVING IMAGE TRANSMISSION APPARATUS**
BILDVERARBEITUNGSSYSTEM, BILDANZEIGEVORRICHTUNG, BILDÜBERTRAGUNGSVORRICHTUNG, VERFAHREN ZUR ANSTEUERUNG DER BILDANZEIGEVORRICHTUNG UND VERFAHREN ZUR ANSTEUERUNG DER BILDÜBERTRAGUNGSVORRICHTUNG
SYSTÈME DE TRAITEMENT D'IMAGES, APPAREIL D'AFFICHAGE D'IMAGES, APPAREIL DE TRANSMISSION D'IMAGES, PROCÉDÉ DE COMMANDE D'APPAREIL D'AFFICHAGE D'IMAGES ET PROCÉDÉ DE COMMANDE D'UN APPAREIL DE TRANSMISSION D'IMAGES

(30) Priority: 13.04.2015 KR 20150051794
(43) Date of publication of application: 19.10.2016
(73) Proprietor: Samsung Electronics Co., Ltd., Gyeonggi-do 16677 (KR)
(72) Inventor: KA, Jee-hoon, Gyeonggi-do (KR); YUN, Hyun-kyu, Seoul (KR); LEE, Sang-jun, Gyeonggi-do (KR); PARK, Sung-woo, Seoul (KR)
(74) Representative: Appleyard Lees IP LLP

(56) References cited:
- EP-A1- 1 653 736
- JP-A- 2008 219 392
- US-A1- 2008 051 027
- US-A1- 2010 253 844
- US-A1- 2011 162 014

## Description

### BACKGROUND

### 1. Field

The disclosure generally relates to an image processing system, an image display apparatus, an image transmission apparatus, a method for driving the image display apparatus, and a method for driving the image transmission apparatus, and for example, to an image processing system in which an image display apparatus, such as, a Digital Television (DTV), changes a power operation state of another image transmission apparatus based on user viewing information, an image display apparatus, an image transmission apparatus, a method for driving the image display apparatus, and a method for driving the image transmission apparatus.

### 2. Description of Related Art

In general, an image display apparatus includes an input unit for inputting an image and a display for displaying an image within a single body. In this case, the input unit refers to an input terminal to which diverse image mediums for receiving an image may be connected. For example, a set-top box (STB) for a broadcast service or a Video On Demand (VOD) service, a Blue-Ray Disk (BD) player, and the like may be connected to the input terminal.

However, such system involves a spatial constraint. That is, in a common domestic environment, an image display apparatus may be installed on various positions including a living room, but a STB needs to be fixed on a certain position, and thus, a user is unable to view an image freely. In order to resolve this problem, the conventional art provided a method for connecting an image display apparatus and an image transmission apparatus which is capable of processing image data of the STB in a wireless manner.

In this case, a user is able to view an image freely. However, it is difficult to control power between two independent apparatuses, and thus, power waste is caused. For example, when the two independent apparatuses are installed on different positions, the apparatuses need to be controlled separately, which causes inconvenience.

US 2008/0051027 A1 describes a wireless set-top box, a wireless display apparatus, a wireless video system, which can receive and transmit audio/video (AV) data and control data by a multi-channel communication. JP2008219392A relates to a television receiver provided with a video display means for displaying the pictures of the broadcast program.

### SUMMARY

According to the present invention there is provided an apparatus and method as set forth in the appended claims. Other features of the invention will be apparent from the dependent claims, and the description which follows.

The disclosure is provided to address the aforementioned and other problems and disadvantages occurring in the related art, and an aspect of the disclosure provides an image processing system in which an image display apparatus, such as, a DTV, changes a power operation state of an image transmission apparatus (e.g., an adjacent image transmission apparatus) based on viewing information, an image display apparatus, an image transmission apparatus, a method for driving the image display apparatus, and a method for driving the image transmission apparatus.

According to an example of the disclosure, an image processing system including an image display apparatus in operative communication with an image transmission apparatus is provided. The system includes an image transmission apparatus configured to transmit image data to the image display apparatus by wireless communication and an image display apparatus configured to receive image data from the image transmission apparatus by wireless communication and to display the image data. In response to being turned on, the image display apparatus may be configured to transmit a first control signal to the image transmission apparatus for booting up the image transmission apparatus, and in response to the image transmission apparatus being booted up, the image display apparatus may be configured to transmit a second control signal to the image transmission apparatus for changing a state of the booted up image transmission apparatus to a power saving state based on previous viewing information stored in the image display apparatus.

According to an example of the disclosure, an image display apparatus operating with an image transmission apparatus (e.g., an adjacent image transmission apparatus) by wireless communication is provided. The image display apparatus includes an operation state processor configured to generate a first control signal for booting up the image transmission apparatus in response to the image display apparatus being turned on, and to generate a second control signal for changing a state of the booted up image transmission apparatus to a power saving state based on previous viewing information stored in the image display apparatus and a communication interface configured to transmit the generated first control signal and second control signal to the image transmission apparatus under control of the operation state processor.

In response to the previous viewing information of an image of the image transmission apparatus not being present, the operation state processor may be configured to provide the second control signal for changing a state of the image transmission apparatus to the power saving state.

In response to the previous viewing information of an image of the image transmission apparatus being present, the operation state processor may be configured to receive and process an image of the image transmission apparatus.

In response to viewing with respect to an image of the image transmission apparatus being changed, the operation state processor may be configured to generate the second control signal for changing a state of the image transmission apparatus to a power saving state.

In response to a third control signal being received from the image transmission apparatus while the image display apparatus is turned off, the operation state processor may be configured to turn on the image display apparatus to receive and process an image from the image transmission apparatus.

The operation state processor may be configured to use information of an image viewed before the image display apparatus is turned off as the previous viewing information.

The image display apparatus may further include a display configured to display an image provided by the image transmission apparatus or an image provided through a communication network. In response to a viewing convert command being received while an image of the image transmission apparatus is being viewed, the operation state processor may be configured to control the display to display the image provided through the communication network.

According to an example of the disclosure, an image transmission apparatus operating with an image display apparatus by wireless communication is provided. The image transmission apparatus includes a communication interface configured to receive a first control signal for booting up the image transmission apparatus and to receive a second control signal for changing a state of the booted up image transmission apparatus to a power saving state based on previous viewing information stored in the image display apparatus from the image display apparatus and power state management circuitry configured to boot up the image transmission apparatus based on the first control signal and to change a state of the booted up image transmission apparatus to a power saving state based on the second control signal.

In response to the previous viewing information of an image transmitted from the image transmission apparatus to the image display apparatus not being present, the power state management circuitry may be configured to change a power operation state of the image transmission apparatus to a power saving state.

In response to the previous viewing information of an image transmitted from the image transmission apparatus to the image display apparatus being present, the power state management circuitry may be configured to control the communication interface to transmit an image to the image display apparatus.

In response to viewing the image received from the image transmission apparatus being changed, the power state management circuitry may be configured to change a state to the power saving state.

In response to receiving a command to turn on the image transmission apparatus while the image display apparatus is turned off, the power state management circuitry may be configured to control the communication interface to turn on the image display apparatus and to process an image provided by the image transmission apparatus.

The previous viewing information may include information of an image that was viewed before the image display apparatus is turned off.

According to an example of the disclosure, a method for driving an image display apparatus operating with an image transmission apparatus (e.g., an adjacent image transmission apparatus) by wireless communication is provided. The method includes generating, in response to the image display apparatus being turned on, a first control signal for booting up the image transmission apparatus and a second control signal for changing a state of the booted up image transmission apparatus to a power saving state based on previous viewing information stored in the image display apparatus and transmitting the generated first control signal and second control signal to the image transmission apparatus.

In response to the previous viewing information of an image of the image transmission apparatus not being present, the generating the second control signal may include generating the second control signal for changing a state of the image transmission apparatus to the power saving state.

The method may further include receiving and processing an image from the image transmission apparatus, in response to the previous viewing information of an image of the image transmission apparatus being present.

The method may further include receiving a command to convert viewing with respect to an image received from the image transmission apparatus. The generating the second control signal may include generating the second control signal for changing a state of the image transmission apparatus to the power saving state based on the received command.

The method may further include receiving a third control signal provided by the image transmission apparatus while the image display apparatus is turned off and turning on the image display apparatus based on the received third control signal to receive and process an image of the image transmission apparatus.

The generating the second control signal may include using viewing information of an image viewed before the image display apparatus is turned off as the previous viewing information.

According to an example of the disclosure, a method for driving an image transmission apparatus operating with an image display apparatus by wireless communication is provided. The method includes receiving a first control signal for booting up the image transmission apparatus and receiving a second control signal for changing a state of the booted up image transmission apparatus to a power saving state based on previous viewing information stored in the image display apparatus received from the image display apparatus and booting up the image transmission apparatus based on the first control signal and changing a state of the booted up image transmission apparatus to a power saving state based on the second control signal.

In response to the previous viewing information of an image transmitted from an image transmission apparatus to the image display apparatus not being present, the changing the state of the booted up image transmission apparatus changing the state of the booted up image transmission apparatus to the power saving state.

The method may further include controlling, in response to the previous viewing information of an image transmitted from an image transmission apparatus to the image display apparatus being present, a communication interface to transmit an image of the image transmission apparatus to the image display apparatus.

In response to viewing with respect to the image received from the image transmission apparatus being changed, the changing the state of the booted up image transmission apparatus may include changing the state of the booted up image transmission apparatus to the power saving state.

The method may further include receiving a command to turn on the image transmission apparatus while the image display apparatus is turned off, and turning on the image display apparatus based on the received command to process an image of the image transmission apparatus.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram illustrating an example image processing system;
FIG. 2 is a block diagram illustrating an example structure of an image display apparatus;
FIG. 3 is a block diagram illustrating an example structure of an image display apparatus;
FIG. 4 is a block diagram illustrating an example structure of an image transmission apparatus;
FIG. 5 is a block diagram illustrating an example structure of an image transmission apparatus;
FIG. 6 is a diagram illustrating an example process of controlling power between the image display apparatus and the image transmission apparatus of FIG. 1;
FIG. 7 is a a diagram illustrating an example process of controlling power between the image display apparatus and the image transmission apparatus of FIG. 1;
FIG. 8 is a diagram illustrating an example process of controlling power between the image display apparatus and the image transmission apparatus of FIG. 1;
FIG. 9 is a diagram illustrating an example process of controlling power between the image display apparatus and the image transmission apparatus of FIG. 1;
FIG. 10 is a diagram illustrating an example process of controlling power between the image display apparatus and the image transmission apparatus of FIG. 1;
FIG. 11 is a flow chart illustrating an example process of driving an image display apparatus; and
FIG. 12 is a flow chart illustrating an example process of driving an image transmission apparatus.

### DETAILED DESCRIPTION

Certain examples are described in greater detail below with reference to the accompanying drawings.

In the following description, like drawing reference numerals are used for the like elements, even in different drawings. The matters defined in the disclosure, such as detailed construction and elements, are provided to assist in an understanding of examples. However, embodiments can be practiced without those specifically defined matters. Also, well-known functions or constructions are not described in detail since they may obscure the application with unnecessary detail.

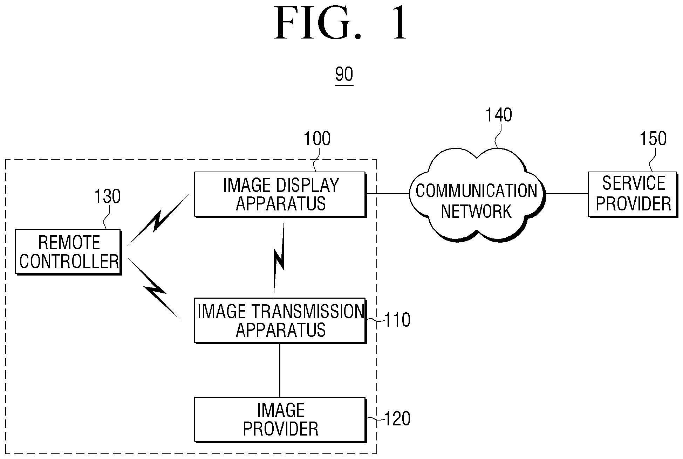

FIG. 1 is a diagram illustrating an example image processing system.

As illustrated in FIG. 1, an image processing system 90 may include a part or all of an image display apparatus 100, an image transmission apparatus 110, an image provider 120, a remote controller (e.g., including a remote control) 130, a communication network 140, and a service provider 150.

Herein, including a part or all of components may denote that some component, such as, for example, the remote controller 130, may be omitted from the system, or some component, such as, for example, the image transmission apparatus 110, may be integrated with other component, such as, the image provider 120. In this case, it is described that the image processing system 90 includes all of the components illustrated in FIG. 1 for convenience and to aid in understanding of the example.

The image display apparatus 100 may include, for example, diverse apparatuses capable of displaying an image, such as, a DTV, a smart phone, a desktop computer, a laptop computer, an MP3 player, a Plasma Display Panel (PDP), etc. According to an example, the image display apparatus 100 may receive an image provided by the image provider 120, such as, for example, a Universal Serial Bus (USB), a BD player, etc., from the image transmission apparatus 110 and displays the received image in a screen based on, for example, a user command. The image display apparatus 100 may process sound simultaneously. Considering this characteristic, the image display apparatus 100 according to an example may receive and process only an audio signal when the image provider 120 is replaced with a sound system. Accordingly, the example is not limited to an image.

The image display apparatus 100 controls a power operation state of the image transmission apparatus 110 based on its own mode, for example, an operation method. A mode may refer to an arbitrary state in which a particular operation is available or may refer to the particular operation itself. The reference of the mode may be applied to the image transmission apparatus 110 in the same manner. For example, the image transmission apparatus 110 may perform several operations relating to a power state (for example, a normal state or a power saving state), the mode may refer, for example, to a particular state of the image display apparatus 100 in which one of the operations may be performed. The particular state of the image display apparatus 100 may be determined, for example, by selecting a particular button on the remote controller 130.

In a state where the image display apparatus 100 is turned off, and the image transmission apparatus 110 is turned off, the image display apparatus 100 turns on the image transmission apparatus 110 when the image display apparatus 100 is turned on. A turn-on operation of the image display apparatus 100 and the image transmission apparatus 110 may include, for example, a boot-up operation. For example, the image display apparatus 100 may determine whether the image transmission apparatus 110 is turned on currently. Based on the determination, the image display apparatus 100 may transmit a control signal to the image transmission apparatus 110 to turn on the image transmission apparatus 110. In addition, the image display apparatus 100 may check viewing information of an image that was viewed before turning off the image display apparatus 100. In response to determining that there is a viewing history of an image transmitted from the image transmission apparatus 110, the image display apparatus 100 may perform an operation for receiving an image from the image transmission apparatus 110. However, in response to determining that that there is no viewing history of an image transmitted from the image transmission apparatus 110, the image display apparatus 100 may drive the image transmission apparatus 110 in a power saving state, for example, a sleep mode. For example, in response to determining that there is a history of an image being received from the service provider 150 by passing through the external communication network 140, for example, viewing information, the image display apparatus 100 displays the image provided through the communication network 140. This operation will be described below in greater detail.

It is assumed that a user converts viewing in order to use an image service of the image transmission apparatus 110, in this state. In this case, the image display apparatus 100 may wake up the image transmission apparatus 110 that is in the power saving state, for example, the sleep mode. Accordingly, the image transmission apparatus 110 changes from the power saving state to a normal state. In this case, the normal state may refer, for example, to a state in which entire functional blocks of the image transmission apparatus 110 are supplied with power to be driven. The power saving state may refer, for example, to a state where only a part of the blocks are driven to perform a minimum operation, and power supply to the other blocks is cut off. The normal state may, for example, refer to a state in which power is supplied to more functional blocks as compared with the power saving state. After entering the normal state, the image transmission apparatus 110 transmits an image based on a request of the image display apparatus 100. In this process, when a user performs viewing conversion (e.g., change) for viewing an image through the communication network 140 (e.g., instead of viewing an image received from the image transmission apparatus), the image transmission apparatus 110 enters the sleep mode. For example, the state of the image transmission apparatus 110 is changed to a stand-by state. In this case, the sleep mode may refer, for example, to an arbitrary state where power supplied to certain blocks is cut off for power saving. This operation will be described below in greater detail.

When the image display apparatus 100 is turned off while both the image display apparatus 100 and the image transmission apparatus 110 are turned on, at least one of the image display apparatus 100 and the image transmission apparatus 110 may store a route where a present image has been processed, for example, viewing information. The viewing information may be used when the apparatus is turned on again.

In addition, when a user turns on the image transmission apparatus 110 first while both the image display apparatus 100 and the image transmission apparatus 110 are turned off, the image display apparatus 100 may be turned on by control of the image transmission apparatus 110. For example, the image display apparatus 100 may receive a signal from the image transmission apparatus 110 and drive a minimum functional block for processing the signal. In this case, the image display apparatus 100 may perform an additional operation for processing an image, separately from the image transmission apparatus 110. However, when the image transmission apparatus 110 is turned on in advance of the image display apparatus 100, it may be understood that a user wishes to view an image through the image transmission apparatus 110, and thus, the image display apparatus 100 may transmit an image without any additional operation. Accordingly, in the example, a method for performing image processing is not limited.

Meanwhile, although not illustrated in the drawings, the image display apparatus 100 may operate with a broadcast receiver, such as, a STB. For example, the broadcast receiver may be connected to the communication network 140 to receive an image, and the image display apparatus 100 may process an image provided by the broadcast receiver and display the image in a screen.

The image transmission apparatus 110 receives an image from the image provider 120, such as, a USB device, a BD player, etc., and transmits the received image to the image display apparatus 100. According to an example, the image transmission apparatus 110 is connected to the image provider 120 in a wired manner and connected to the image display apparatus 100 in a wireless manner, but is not limited thereto. For example, the image transmission apparatus 110 may be connected to a plurality of image providers 120, not one image provider 120, through an image receiver, that is, an input terminal. As an example, the image transmission apparatus 110 may include a terminal for broadcast, High Definition Multimedia Interface (HDMI), S-video, a USB device, etc, and thus, may be connected to diverse image providers 120 corresponding thereto. Accordingly, the image transmission apparatus 110 may select one of a plurality of image sources based on a request of the image display apparatus 100 and transmit an image of the selected image source to the image display apparatus 100.

The image provider 120 may include, for example, a USB device, a BD player, a camcorder, a mobile phone, etc. As an example, when the image display apparatus 100 is connected to the communication network 140 in order to receive public broadcast, the image provider 120 may be an image source other than the image display apparatus 100. As another example, although not illustrated in the drawings, when the image display apparatus 100 receives an image through an external public broadcast antenna, not an Internet network, the image provider 120 may be a set-top box connected to the communication network 140, such as, the Internet network. In the example, the image provider 120 may be an apparatus that is fixed on a certain position and difficult to change the position, such as, a STB or a BD player. For instance, it is not difficult to connect a portable USB device or a mobile phone to the image display apparatus 100 directly. Accordingly, when the image display apparatus 100 (or a wired image transmission apparatus) may be moved freely, the image transmission apparatus 110 may be an apparatus for easily transmitting an image of the fixed image provider 120 to the image display apparatus 100. However, the example is not limited thereto.

The remote controller 130 includes, for example, a power button for respectively turning on or turning off of the image display apparatus 100 and the image transmission apparatus 110 and may further include various buttons for performing other functions, such as, channel change, etc. Further, the remote controller 130 may turn on or turn off two separate apparatuses simultaneously through an integrated power button. For example, the remote controller 130 may turn on or turn off the image display apparatus 100 and the image transmission apparatus 110 simultaneously through the integrated power button. In addition, the remote controller 130 may turn on or turn off the image display apparatus 100 and the image transmission apparatus 110 respectively through a separate power button.

In the example, only one of the above-described buttons may be provided. For example, even though the power is controlled in an integrated manner, the image display apparatus 100 according to an example may change a power operation state freely based on pre-stored viewing information or viewing information on changing viewing with respect to an image that is currently displayed in the screen. A user is able to freely change an image source displayed in the image display apparatus 100 from the communication network 140 to the image provider 120 or from the image provider 120 to the communication network 140, through the remote controller 130.

The communication network 140 may include a wired communication network and a wireless communication network. For example, the wired communication network may include an Internet network, such as, a cable network or a Public Switched Telephone Network (PSTN), and the wireless communication network may include Code Division Multiple Access (CDMA), Wideband CDMA (WCDMA), General System/Standard for Mobile Communication (GSM), Evolved Packet Core (EPC), Long Term Evolution (LTE), Wireless Broadband Internet (WiBro) network, etc., but is not limited thereto. For example, the communication network 140 according to an example may be used in a cloud computing network under a cloud computing environment as an access network of a next-generation mobile communication system to be realized at a later date, for example. As an example, when the communication network 140 is a wired communication network, an access point in the communication network 140 may access an exchange office of a telephone company. When the communication network 140 is a wireless communication network, data may be processed by accessing a Serving GPRS Support Node (SGSN) or a Gateway GPRS Support Node (GGSN) operated by a communication common carrier or by accessing diverse relay devices, such as, Base Station Transmission (BTS), NodeB, e-NodeB, etc.

The communication network 140 may include an access point. The access point may include a small base station, such as, femto or pico which may be commonly installed within in a building. For example, a femto base station or a pico base station may be classified based on the maximum number of accessible image display apparatus 100. The access point may include a local area communication module for performing local area communication, such as, Zigbee, Wireless-Fidelity (Wi-Fi), etc., with the image display apparatus 100. The access point may use, for example, Transmission Control Protocol (TCP)/Internet Protocol (IP) or Real-Time Streaming Protocol (RTSP) for wireless communication. For example, the local area communication may be performed according to various standards, such as, Bluetooth, Zigbee, Infrared Data Association (IrDA), Radio Frequency (RF) including Ultra High Frequency (UHF) and Very High Frequency (VHF), Ultra Wide Band (UWB), etc., as well as Wi-Fi. Accordingly, the access point may extract a position of a data packet, designate an optimum communication route for the extracted position, and transmit the data packet to a next apparatus, for example, the image display apparatus 100, along the designated communication route. The access point may share several circuits in a general network environment, for example, a router, a repeater, a relay device, etc.

The service provider 150 may, for example, be one of various image sources. By way of example, the service provider 150 may be a broadcast server of a broadcasting company or may be a server of a VOD service provider and a server of a search portal having a search engine, or the like. The service provider 150 is similar to the image provider 120 in that both the service provider 150 and the image provider 120 are the image sources. However, the service provider 150 is distinct from the image provider 120 in that the service provider 150 is based on online, for example, Internet, whereas the image provider 120 may typically be a user-based offline apparatus. In this regard, the service provider 150 may be linked with a third party providing diverse contents, for example, a sub-party company, to provide the image display apparatus 100 with the contents.

As described above, according to an example, when the image transmission apparatus 110 is in a power saving state, the image transmission apparatus 110 may react to a mode change of the image display apparatus 100 more quickly. For example, the image transmission apparatus 110 may perform a corresponding operation more quickly. For example, when a TV of S company in Korea may require five to ten seconds to be turned on from a power off state, the TV may require one to two seconds to be turned on from a power saving state.

Accordingly, in the image transmission apparatus 110, converting from a power saving state to a normal state may be performed faster than converting from a power off state to a normal state, which may be because a boot-up time is necessary when an apparatus is turned on in a power off state.

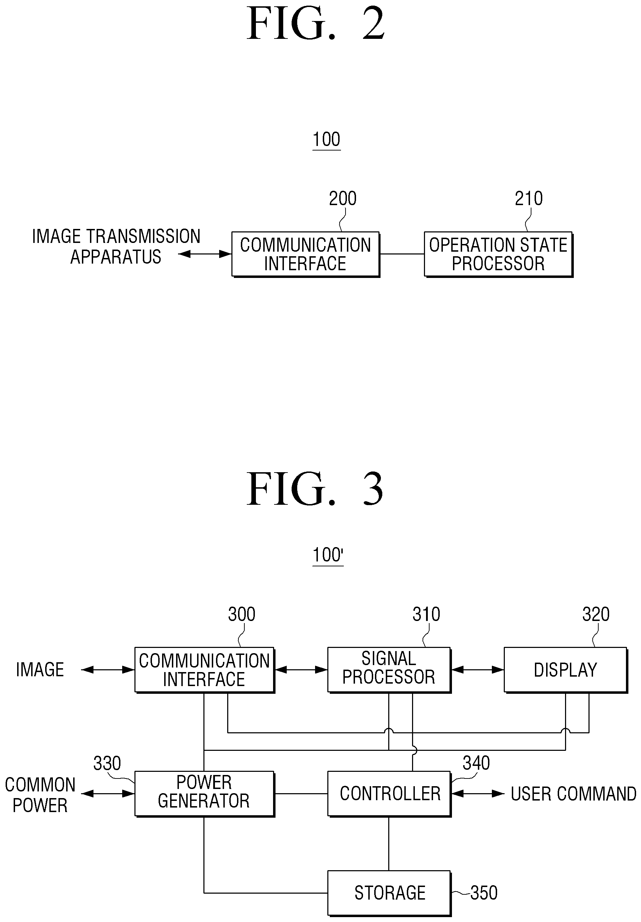

FIG. 2 is a block diagram illustrating an example structure of an image display apparatus.

Referring to FIG. 2 with FIG. 1, the image display apparatus 100 may include a part or all of a communication interface 200 and an operation state processor (e.g., including processing circuitry) 210.

Including a part or all of components may refer, for example, to a case in which one component may be omitted or integrated with another component. In this case, it is described that the image display apparatus 100 includes all of the components for convenience and to aid in understanding of the example.

The communication interface 200 may be linked with the operation state processor 210 and may perform an operation relating to image processing. Considering this operation in connection with control of a power operation state according to an example, when the image display apparatus 100 is turned on from a power off state, the communication interface 200 may transmit a control signal for turning on the image transmission apparatus 110. In advance of transmitting the control signal, an operation of determining whether the image transmission apparatus 110 is currently turned off may be performed. For example, when a request signal is transmitted to the image transmission apparatus 110 in order to determine the state of the image transmission apparatus 110, the communication interface 200 may receive a response signal corresponding to (e.g., in response to) the request signal.

The communication interface 200 may transmit a control signal for changing a power operation state of the image transmission apparatus 110 to a power saving state, for example, a sleep mode, under control of the operation state processor 210. The communication interface 200 may also receive a response signal corresponding to the transmitted control signal. As described above, changing a state of the image transmission apparatus 110 from a normal state to a power saving state may be seen as a processes for responding to a request of the image display apparatus 100 quickly. Accordingly, the image transmission apparatus 110 enters a stand-by state. For example, when the image display apparatus 100 makes a request for an image from the image provider 120 to the image transmission apparatus 110, a fast response to the request is required. For example, when the image transmission apparatus 110 performs only a turning-on operation or a turning-off operation, a response time to a request is delayed inevitably. For example, when a state is changed from a stand-by state, for example, a sleep mode, to a normal state, a boot-up time during a tuning-on operation may be reduced, thereby decreasing the response time.

In addition, even though the image display apparatus 100 is turned off, the communication interface 200 may maintain a normal state of the communication interface 200. For example, the power may be supplied to only the communication interface 200. To accomplish this, the communication interface 200 may include, for example, a separate controller, e.g., a Central Processing Unit (CPU). In response to a signal being received from the image transmission apparatus 110, the communication interface 200 may wake up the operation state processor 210 and transmit the received control signal. For example, when a user turns on the image transmission apparatus 110 first while the image display apparatus 100 is turned off, it may be determined that the user wishes to view an image of the image provider 120. Accordingly, in response to a control signal for turning on power being transmitted to from the image transmission apparatus 110 to the image display apparatus 100, the communication interface 200 receives the signal.

Other than the above, the communication interface 200 may be linked with the image transmission apparatus 110 and process various signals. This operation will be described below in greater detail, and thus, the repeated description is omitted. As an example, the communication interface 200 may perform an operation for receiving an image.

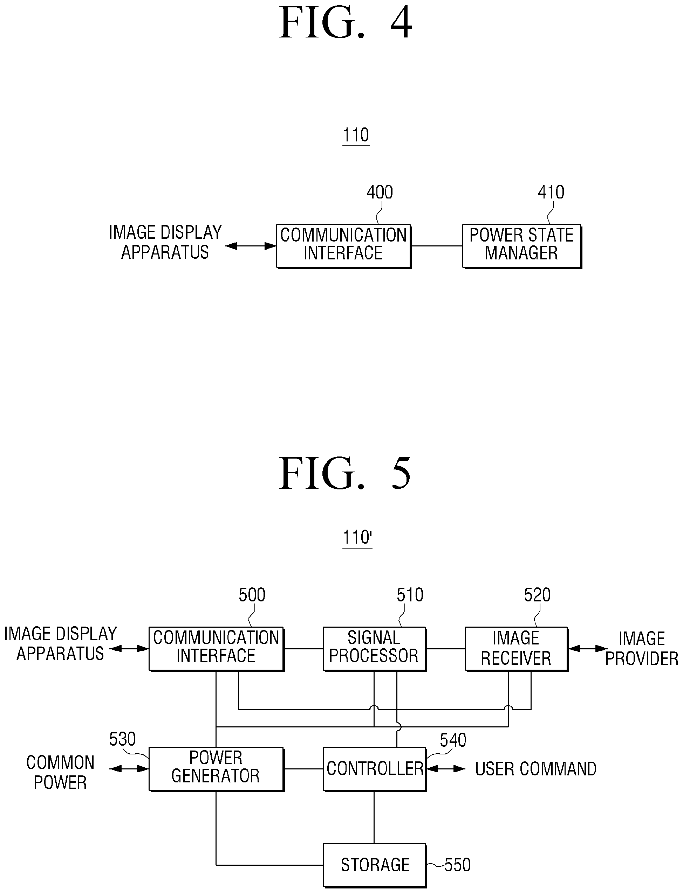

As in the case of a communication interface 400 of the image transmission apparatus 110 (see, e.g., FIG. 4), the communication interface 200 may include two communication modules. For example, the communication interface 200 may include a communication module for processing an image through the external communication network 140 and a communication module for performing mutual local area communication, for example, direct communication using Wi-Fi, for example, a local area communication module.

In response to the image display apparatus 100 being turned on based on a user request while the image display apparatus 100 and the image transmission apparatus 110 are turned off, the operation state processor 210 may be configured to call a pre-stored control signal in order to turn on the image transmission apparatus 110 from a power off state or to generate a control signal and transmit the generated control signal to the communication interface 200. In this case, the operation of calling a pre-stored control signal or generating a control signal may be referred to as "generation."

According to the transmission of the control signal, the operation state processor 210 may be configured to drive the image transmission apparatus 110 in a normal state. The operation state processor 210 may be configured to determine whether there is viewing information stored in an internal memory, for example. The viewing information may be stored and managed, for example, in a software-based manner, and thus, a storage of the viewing information is not limited to the above-described memory.

For example, in response to determining that an image that was viewed before the image display apparatus 100 is turned off is an image of the image transmission apparatus 110, the operation state processor 210 may be configured to request an image service of the image transmission apparatus 110. In response to determining that there is a history where an image was provided through a route other than the image transmission apparatus 110, for example, the communication network 140 of FIG. 1, the operation state processor 210 may be configured to generate a control signal corresponding to a sleep mode and transmit the signal to the image transmission apparatus 110 in order to maintain the power operation state of the image transmission apparatus 110 as the power saving state.

In addition, the operation state processor 210 may be configured to wake up the image transmission apparatus 110 from a sleep mode, to convert the state to the normal state, and to receive an image based on, for example, a user command. The operation state processor 210 may also be configured to turn off the image transmission apparatus 110 when the image display apparatus 100 is turned off.

The communication interface 200 and the operation state processor 210 of FIG. 2 may, for example, be realized as physically divided chips to store and execute respective programs for performing the above-described operation. A part or all of software modules constituting the program may be realized as hardware (e.g., configurable circuitry). For example, in response to the programs being stored and executed respectively, the communication interface 200 and the operation state processor 210 may be realized as a Read-Only Memory (ROM), an Erasable and programmable ROM (EPROM), an Electrically Erasable and Programmable ROM (EEPROM), etc.

The operation state processor 210 has been described in connection with the operation of processing the power operation state, with reference to FIG. 2. Considering the image processing, the operation state processor 210 may have a structure illustrated in FIG. 3.

FIG. 3 is a block diagram illustrating an example structure of an image display apparatus.

Referring to FIG. 3 with FIG. 1, an example image display apparatus 100' may include a part of all of a communication interface 300, a signal processor 310, a display 320, a power generator 330, a controller 340, and a storage 350.

Herein, including a part or all of components may denote, for example, that some component, such as, the storage 350, may be omitted from the image display apparatus 100', or some component, such as, the controller 340, may be integrated with other component, such as, the signal processor 310. In this case, it is described that the image display apparatus 100' includes all of the components for convenience and to aid in understanding of the example.

The communication interface 300 is similar to the communication interface 200 of FIG. 2. However, in response to receiving an image, the communication interface 300 transmits the received image to the signal processor 310. In addition, the communication interface 300 may be supplied with power provided by the power generator 330 under control of, for example, the controller 340. For example, when the image display apparatus 100' is in a power off state, the communication interface 300 may be supplied with power from the power generator 330 in order to be able to receive a signal from the image transmission apparatus 110.

The signal processor 310 may extract a video signal and an audio signal from the received image. In response to additional information, such as, subtitle information, being present in the received image, the signal processor 310 may extract the additional information as well. The signal processor 310 may further be configured to perform an operation of decoding or scaling the video signal and the audio signal. When the signal processor 310 includes a Graphic User Interface (GUI) generator, the signal processor 310 may be configured to perform an operation of combining the additional information with an scaled image or mixing menu information based on a request.

The display 320 displays an image provided by the image transmission apparatus 110 of FIG. 1 or an image provided by the communication network 140 under control of the controller 340 based, for example, on a user request.

The controller 340 may be configured to control overall operations of the communication interface 300, the signal processor 310, the display 320, the power generator 330, and the storage 350. For example, in response to the image display apparatus 100' being turned on based on, for example, a user request, the controller 340 may be configured to control the power generator 330 such that power is supplied to the communication interface 300, the signal processor 310, the display 320, and the storage 350. In addition, the controller 340 may be configured to generate a control signal for turning on the image transmission apparatus 110 and to transmit the generated control signal to the communication interface 300. In this case, "generation" may refer, for example, to calling and providing a control signal stored in the storage 350.

In addition, the controller 340 may be configure to control the communication interface 300 to check viewing information stored in the storage 350 and to request an image from the image transmission apparatus 110 or to provide a control signal for changing a power operation state of the image transmission apparatus 110 to a power saving mode based on the check result.

The power generator 330 is supplied with external commercial electricity, for example, power of 220 V and generates a Direct Current (DC) power necessary for the communication interface 300, the signal processor 310, the display 320, and the storage 350. The DC power may, for example, be various levels of voltage, such as, Vcc power (e.g., 14 V), etc. FIG. 3 illustrates that the same level of power is supplied for convenience and to aid in explanation, but the voltage level may vary. The power generated in the power generator 330 is supplied to respective blocks under control of the controller 340. Accordingly, the power generator 330 may include a switch controlled by the controller 340 to supply or cut off the power.

The storage 350 may store a control signal (or control information) for controlling the image transmission apparatus 110. For example, in case of 2-bit information, when it is prescribed that '01' is a signal for turning on the image transmission apparatus 110, and '11' is a signal for changing the power operation state of the image transmission apparatus 110 from the normal state to the power saving state, such control information may be stored in the storage 350. In addition, the storage 350 may store viewing information. The viewing information belongs to information on an image that the user viewed before turning off the image display apparatus 100', for example, information as to whether the user viewed a broadcast. The information may be output under control of the controller 340.

FIG. 4 is a block diagram illustrating an example structure of an image transmission apparatus.

Referring to FIG. 4 with FIG. 1, the image transmission apparatus 110 may include, for example, a part or all of the communication interface 400 and a power state manager (e.g., including power state management circuitry) 410. Herein, including a part or all of components denotes that some component may be omitted or may be integrated with other component, as described above.

The communication interface 400 may be configured to operate in a normal state in order to receive a control signal provided from the image display apparatus 100 while the image transmission apparatus 110 is turned off. In this case, the normal state may refer, for example, to a state in which power is supplied such that the communication interface 400 is awake. The communication interface 400 may include, for example, a controller for waking up the power state manager 410 in order to transmit the received control signal to the power state manager 410, for example, a CPU. Accordingly, the power state manager 410 may apply power to all of the particular functional blocks such that the image transmission apparatus 110 operates in the normal state.

In response to receiving a command to turn on the image transmission apparatus 110 first while the image display apparatus 100 is turned off, the communication interface 400 may check a power off state of the image display apparatus 100 and transmit a control signal for turning on the image display apparatus 100 under control of the power state manager 410. The power off state of the image display apparatus 100 may be determined, for example, by receiving no response to the signal transmitted to the image display apparatus 100 or by checking pre-stored information.

The power state manager 410 may be configured to change the power operation state of the image transmission apparatus 110 based on the control signal transmitted from the communication interface 400. For example, in response to receiving a control signal for turning on main power from the image display apparatus 100 while the image transmission apparatus 110 is turned off, the power state manager 410 may be configured to supply main power such that the image transmission apparatus 110 operates in the normal state. In response to receiving a control signal for changing a state to a sleep mode from the image display apparatus 100, the power state manager 410 may be configured to change a state to a power saving mode for saving power. For example, the power state manager 410 may be configured to cut off power with respect to some functional block of the power state manager 410 in order to save power.

In addition, in response to receiving a command to turn on the image transmission apparatus 110 while the image display apparatus 100 is turned off, the power state manager 410 may be configured to generate a corresponding control command and to control the communication interface 400 to transmit the control signal to the image display apparatus 100.

As described above, the image transmission apparatus 110 may operate in a power on state, a sleep mode state, and a power off state. For example, in the power off state, the image transmission apparatus 110 may maintain the communication interface 400 in an active state and use minimum power in order to receive a simple low-power signal from the image display apparatus 100. In the sleep mode, the image transmission apparatus 110 may maintain a storage which is separate from the communication interface 400 or a memory in the power state manager 410 in an active state. In this case, the communication interface 400 is in the active state but consumes greater power as compared with a power off state. In the power on state, for example, the normal state, the image transmission apparatus 110 may maintain all components, for example, the communication interface 400 and the power state manager 410 in the active state. When one block uses the same voltage as another block, but an amount of used current of each block is different, the block operates in low power.

As described above, the communication interface 400 and the power state manager 410 may be realized, for example, by executing a program stored in the ROM, the EPROM, or the EEROM, but is not limited thereto. For example, it is also possible to realize a part or all of the software modules of the program on a substrate in a hardware-based manner (e.g., various circuitry), and thus, the example is not limited thereto.

The image transmission apparatus 110 has been described in connection with the power operation state, with reference to FIG. 4. Hereinafter, the image transmission apparatus 110 will be described in connection with image processing, and with reference to FIG. 4.

FIG. 5 is a block diagram illustrating an example structure of an image transmission apparatus.

Referring to FIG. 5 with FIG. 1, an image transmission apparatus 110' may include a part or all of a communication interface 500, a signal processor 510, an image receiver 520, a power generator 530, a controller 540, and a storage 550. Herein, including a part or all of components denotes that some component(s) may be omitted or may be integrated with other component, as described above.

Comparing a structure of the image transmission apparatus 110' illustrated in FIG. 5 with the structure of the image display apparatus 100' in FIG. 3, both structures are similar to each other over all in terms of image processing. Accordingly, the description overlapping with the above description on the image display apparatus 100' of FIG. 3 may be omitted.

However, the image transmission apparatus 110' of FIG. 5 is distinct from the image display apparatus 100' of FIG. 3 in that the image transmission apparatus 110' of FIG. 5 changes a power operation state from a normal state to a power saving state or from a power saving state to a normal state based on control of the image display apparatus 100'. In addition, the image transmission apparatus 110' of FIG. 5 is distinct from the image display apparatus 100' of FIG. 3 in that the image transmission apparatus 110' of FIG. 5 receives an image provided by the image provider 120 of FIG. 1 through an input terminal and transmits the received image to the image display apparatus 100'.

For example, in response to receiving a control signal for turning on the image transmission apparatus 110' from the image display apparatus 100 of FIG. 1, the image transmission apparatus 110' may be configured to control the power generator 530 based on the control signal such that the communication interface 500, the signal processor 510, the image receiver 520, the controller 540, and the storage 550 are supplied with power and driven in a normal state. For example, in response to receiving a control signal, the communication interface 500 may wake up the controller 540 and transmit the received control signal. Subsequently, the controller 540 may check the received control signal and control other functional blocks, for example, the power generator 530, such that the signal processor 510, the image receiver 520, and the storage 550 are supplied with power.

During the above process, in response to receiving a command from the image display apparatus 100 to change a state to a sleep mode, the controller 540 may be configured to cut off the power supplied to the signal processor 510, the image receiver 520, and the storage 550, other than the communication interface 500, and may be configured to cut off the power supplied to the controller 540. The image transmission apparatus 110' performs a minimum function in the sleep mode.

In response to receiving a request for an image service from the image display apparatus 100 after the image transmission apparatus 110' is turned on based on a turn-on command received from the image display apparatus 100, the controller 540 may be configured to transmit an image of the image provider 120 received through the image receiver 520 to the image display apparatus 100. In this process, the signal processor 510 may be configured to perform an operation of encoding the image or converting information. For example, in response to various types of image sources being connected to the image receiver 520, the controller 540 may be configured to select a certain image source and transmit an image corresponding to a selected channel based on a request of the image display apparatus 100.

The image transmission apparatus 110' may receive a turn-on command while the image display apparatus 100 is turned off, and thus, may store and use diverse information in the storage 550. This operation has been described above, and thus, the repeated description is omitted.

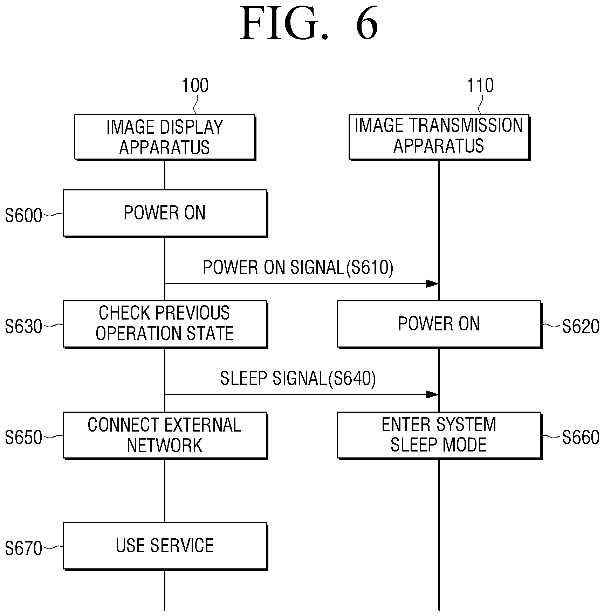

FIG. 6 is a diagram illustrating an example process of controlling power between the image display apparatus and the image transmission apparatus of FIG. 1.

Referring to FIG.6 with FIG. 1, while both the image display apparatus 100 and the image transmission apparatus 110 are turned off, the image display apparatus 100 may receive a command to turn on the image display apparatus 100 in operation S600.

The above-described operation may be performed in various ways. For example, in response to receiving a turn-on command, the image display apparatus 100 may transmit a power on signal to the image transmission apparatus 110 regardless of a current state of the image transmission apparatus 110 in operation S610. The image display apparatus 100 may transmit a power on signal to the image transmission apparatus 110 after checking the current state of the image transmission apparatus 110. For example, the image display apparatus 100 may check information stored in an internal memory. In response to receiving no response to a state check signal, the image display apparatus 100 may determine that the image transmission apparatus 110 is turned off and transmit a power on signal to the image transmission apparatus 110.

In response to receiving the power on signal, the image transmission apparatus 110 is turned on in operation S620. This process may include, for example, a boot-up operation.

While the image transmission apparatus 110 is turned on, the image display apparatus 100 may check a previous operation state in operation S630. For example, the image display apparatus 100 may check viewing information of an image that was viewed before the image display apparatus 100 is turned off.

In response to determining that the user did not view any image from the image transmission apparatus 110, the image display apparatus 100 may transmit a control signal for driving the image transmission apparatus 110 in a sleep mode, in operation S640.

Accordingly, the image transmission apparatus 110 enters a sleep mode, for example, a power saving state, in operation S660.

In response to determining that the user viewed an image from an external network, the image display apparatus 100 attempts a connection to the external network in operation S650. The external network may refer, for example to an image source other than the image transmission apparatus 110. For example, the external network may refer to the service provider 150 of FIG. 1.

Upon completion of the connection, the image display apparatus 100 uses a service of the service provider 150, for example, in operation S670.

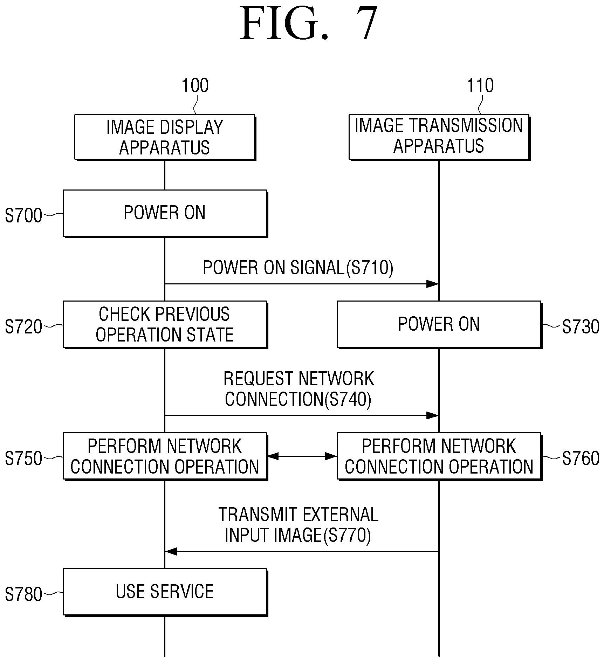

FIG. 7 is a diagram illustrating an example process of controlling power between the image display apparatus and the image transmission apparatus of FIG. 1.

Comparing FIG. 7 with FIG. 6, FIG. 7 illustrates a case where it has been determined that a user viewed an image from the image transmission apparatus 110 based on a check result on the previous state in operation S630 of FIG. 6, in operation S720.

In this example, the image display apparatus 100 requests a network connection from the image transmission apparatus 110 in operation S740, and performs a connection operation between two apparatuses in operations S750 and S760. As an example, when it is possible to perform direct communication between the image display apparatus 100 and the image transmission apparatus 110, an operation for the direct communication may be performed. When a simple request or response is processed as a Bluetooth (BT) signal, the network connection operation may be performed by Wi-Fi communication, etc.

Upon completion of the connection operation, the image display apparatus 100 uses an image service provided by the image transmission apparatus 110 in operations S770 and S780.

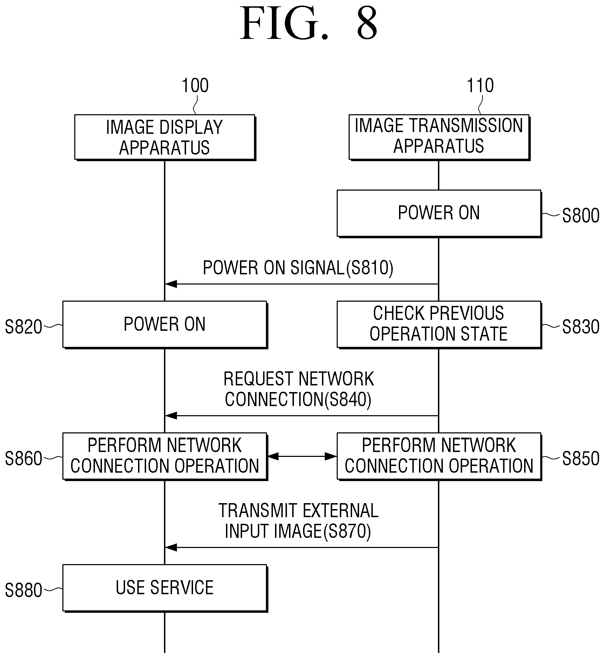

FIG. 8 is a diagram illustrating an example process of controlling power between the image display apparatus and the image transmission apparatus of FIG. 1.

FIG. 8 illustrates a case where the image transmission apparatus 110 is turned on first while both the image display apparatus 100 and the image transmission apparatus 110 are turned off, in operation S800.

The image transmission apparatus 110 may generate a power on signal based on a user request and transmit the generated power on signal to the image display apparatus 100 in operation S810. As described above, the image transmission apparatus 110 may also transmit a power on signal after checking a current state of the image display apparatus 100.

In response to the power on signal being transmitted, the image display apparatus 100 turns on power based on the signal in operation S820. In this example, turning on the power, for example, turning on main power may refer to a normal state.

The image transmission apparatus 110 checks a previous operation state in operation S830. In response to determining that the image transmission apparatus 110 provided an image before the image display apparatus 100 was turned off, the image transmission apparatus 110 requests the network connection in operation S840 and performs a connection operation in operations S850 to S860. Upon completion of the connection operation, the image transmission apparatus 110 transmits an image to the image display apparatus 100 in operation S870.

The image display apparatus 100 uses an image service provided too the image transmission apparatus 110 in operation S880.

Operation S830 may optionally be omitted. For example, turning on the image transmission apparatus 110 first may be understood that the user wishes to use an image service of the image transmission apparatus 110, and thus, the operation S840 may be performed without checking a previous operation state. The example is not limited to the above descriptions.

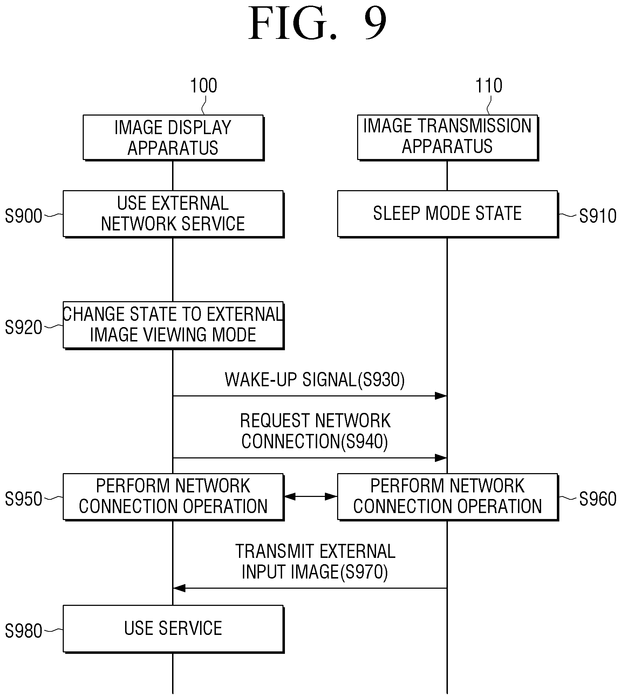

FIG. 9 is a illustrating an example process of controlling power between the image display apparatus and the image transmission apparatus of FIG. 1.

FIG. 9 illustrates a case in which the image display apparatus 100 is using an external network service, and the image transmission apparatus 110 is in a sleep mode when both the image display apparatus 100 and the image transmission apparatus 110 of FIG. 1 are turned on, in operations S900 and S910. This operation may be understood as an operation which follows the operation of FIG. 6.

As described above, the image display apparatus 100 may receive a change to an external image viewing mode from a user while using a service through the external network in operation S920. In this example, external image viewing may refer, for example, to the image transmission apparatus 110.

In this example, the image display apparatus 100 may record or determine that the image transmission apparatus 110 is in the sleep mode. The image display apparatus 100 may transmit a wake-up signal for waking up the image transmission apparatus 110 based on the record in operation S930. For example, the image display apparatus 100 may change the sleep mode of the image transmission apparatus 110 to the normal state by the wake-up signal.

The image display apparatus 100 requests a network connection to the image transmission apparatus 110 in operation S940 and performs a connection operation between the two apparatuses in operations S950 to S960.

Upon completion of the connection operation, the image display apparatus 100 uses an image service from the image transmission apparatus 110 in operations S970 and S980.

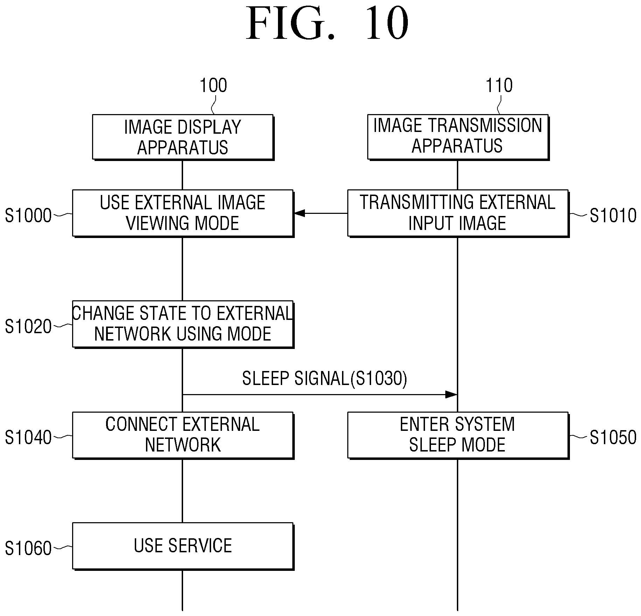

FIG. 10 is a diagram illustrating an example process of controlling power between the image display apparatus and the image transmission apparatus of FIG. 1.

FIG. 10 illustrates a case where the image display apparatus 100 of FIG. 1 is using an image service of the image transmission apparatus 110. This operation may be understood as an operation which follows the operation of FIG.7 or FIG. 8.

The image display apparatus 100 is using the image service of the image transmission apparatus 110 in operations S1000 and S1010.

In response to receiving a command to change a state to an external network-using mode during the above operation in operation S1020, for example, the image display apparatus 100 transmits a control signal (sleep signal) instructing entry of a sleep mode to the image transmission apparatus 110 in operation S1030.

The image transmission apparatus 110 enters the sleep mode in operation S1050. The image display apparatus 100 attempts connection with respect to an external network based on a user request, and upon completion of the connection in operation S1040, uses a service of the external network in operation S1060.

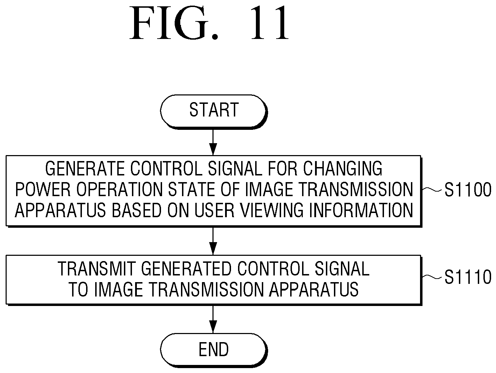

FIG. 11 is a flow chart illustrating an example process of driving an image display apparatus according to an embodiment of the present disclosure.

Referring to FIG. 11 with FIG. 1 for convenience in explanation, the image display apparatus 100 according to an example generates a control signal for changing a power operation state of an image transmission apparatus, for example, the image transmission apparatus 110 of FIG. 1, based on viewing information of a user S1100.

By way of example, in response to being turned on based on a turn-on command, the image display apparatus 100 turns on the image transmission apparatus 110 simultaneously, checks viewing information, and generates a control signal as to whether to maintain a power operation state of the image transmission apparatus 110 as a normal state or whether to change the power operation state to a power saving state based on the check result S1110.

In response to receiving viewing information by viewing conversion from the user, the image display apparatus 100 generates a control signal corresponding to the viewing information.

In order to control the image transmission apparatus 110 freely based on the generated control signal, the image display apparatus 100 transmits the generated control signal to the image transmission apparatus 110 in operation S1110.

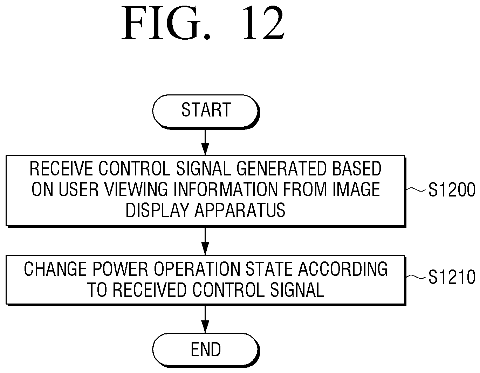

FIG. 12 is a flow chart illustrating an example process of driving an image transmission apparatus.

Referring to FIG. 12 with FIG. 1 for convenience in explanation, an image transmission apparatus, for example, the image transmission apparatus 110 of FIG. 1, receives a control signal generated based on viewing information of a user from the image display apparatus 100 in operation S1200.

For example, while the image transmission apparatus 110 is turned on, the image transmission apparatus 110 may receive a control signal as to whether to maintain a power operation state as a normal state or whether to change the power operation state to a sleep mode, from the image display apparatus 100.

The image transmission apparatus 110 changes the power operation state based on the received control signal in operation S1210. For example, in response to receiving a control signal for entering a sleep mode, the image transmission apparatus 110 changes the power operation state to the sleep mode. In response to receiving a control signal for changing the power operation state from the sleep mode to a normal mode, the image transmission apparatus 110 changes the power operation state to the normal mode.

Although it has been described that all components constituting the examples of the disclosure are combined as one component or operate as one component, the examples are not limited thereto. For example, unless it goes beyond the purpose of the embodiments, all components may be selectively combined as one or more components. In addition, each of the components may be realized as independent hardware. Alternatively, a part or all of the components may be selectively combined and realized as a computer program having a program module which performs a part of or all functions combined in one or a plurality of pieces of hardware. Codes and code segments constituting the computer program may be easily derived by a person having ordinary skill in the art. The computer program may be stored in a non-transitory computer readable medium to be read and executed by a computer thereby realizing the embodiments of the present disclosure.

The non-transitory computer readable medium refers to a medium which may store data permanently or semi-permanently. For example, the above-described various applications and programs may be stored in and provided through the non-transitory computer readable medium, such as, Compact Disc (CD), Digital Versatile Disk (DVD), hard disk, Blu-ray disk, Universal Serial Bus (USB), memory card, Read-Only Memory (ROM), etc.

In summary, an image processing system, an image display apparatus, an image transmission apparatus, a method for controlling the image display apparatus, and a method for controlling the image transmission apparatus are provided. The image processing system including an image display apparatus in operative communication with an image transmission apparatus includes an image transmission apparatus configured to transmit image data to the image display apparatus by wireless communication and an image display apparatus configured to receive image data from the image transmission apparatus by wireless communication and display the image data. In response to being turned on, the image display apparatus may transmit a first control signal for booting up the image transmission apparatus to the image transmission apparatus, and in response to the image transmission apparatus being booted up, transmit a second control signal for changing a state of the booted up image transmission apparatus to a power saving state based on previous viewing information stored in the image display apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. An image display apparatus (100) operating with an image transmission apparatus (110) by wireless communication, the image display apparatus (100) comprising:
a storage;
a communication interface (200); and an operation state processor (210) configured to:
control the storage to store viewing information on an image viewed by a user before image display apparatus (100) is turned off, and
in response to the image display apparatus (100) being turned on, control the communication interface (200) to transmit a first control signal for booting up the image transmission apparatus (110) to the image transmission apparatus (110);
**characterised in that**:
the operation state processor (210) is configured to:
identify whether the viewing information comprises information that an image was provided from the image transmission apparatus (110),
based on identifying the viewing information comprising the information that an image was provided from the image transmission apparatus (110), control the communication interface (200) to transmit a request for a network connection to the image transmission apparatus (110) to use an image service provided by the image transmission apparatus, and
based on identifying the viewing information not comprising information that an image was provided from the image transmission apparatus (110), control the communication interface (200) to transmit a second control signal for changing a state of the booted image transmission apparatus (110) to a power saving state to the image transmission apparatus (110).

2. The image display apparatus (100) of claim 1, wherein in response to the viewing information comprising information that an image was provided from the image transmission apparatus (110), the operation state processor (210) is configured to receive and processes an image of the image transmission apparatus (110).

3. The image display apparatus (100) of claim 2, wherein the operation state processor (210) is configured to turn on the image display apparatus (100), and to receive and processes an image of the image transmission apparatus (110) in response to receiving a third control signal from the image transmission apparatus (110) when the image display apparatus (100) is off.

4. The image display apparatus as claimed in any one of claims 1 to 3, further comprising:
a display (320) configured to display an image provided by the image transmission apparatus (110) or to display an image provided through a communication network,
wherein in response to a viewing change command being received while displaying an image of the image transmission apparatus (110), the operation state processor (210) is configured to control the display to display the image provided through the communication network.

5. A method for controlling an image display apparatus (100) operating with an image transmission apparatus (110) by wireless communication, the method comprising:
storing viewing information on an image viewed by a user before the image display apparatus (100) is turned off;
transmitting, in response to the image display apparatus (100) being turned on, a first control signal for booting up the image transmission apparatus (110) to the image transmission apparatus (110); and
**characterised in that** the method comprises:
identifying whether the viewing information comprises information that an image was provided from the image transmission apparatus (110),
based on identifying the viewing information comprising the information that an image was provided from the image transmission apparatus (110), transmitting a request for a network connection to the image transmission apparatus (110) to use an image service provided by the image transmission apparatus, and
based on identifying the viewing information not comprising information that an image was provided from the image transmission apparatus (110), transmitting a second control signal for changing a state of the booted image transmission apparatus (110) to a power saving state to the image transmission apparatus (110) (S1110).

6. The method of claim 5, further comprising:
receiving and processing by the image display apparatus (100), an image received from the image transmission apparatus (110) in response to the viewing information of an image comprising information that an image was provided from the image transmission apparatus (110).

7. The method of claim 6, further comprising:
receiving a command to change viewing with respect to an image received from the image transmission apparatus (110),
wherein the obtaining the second control signal comprises obtaining the second control signal for changing a state of the image transmission apparatus (110) to the power saving state based on the received user command.

8. The method of claim 7, further comprising:
receiving, by the image display apparatus (100), a third control signal provided by the image transmission apparatus (110) while the image display apparatus (100) is off; and
turning on the image display apparatus (100) based on the received third control signal to receive and process an image of the image transmission apparatus (110).

9. An image processing system (90) including an image display apparatus (100) in operative communication with an image transmission apparatus (110), wherein the image transmission apparatus (110) is configured to transmit image data to the image display apparatus (100) by wireless communication and wherein the image display apparatus (100) is configured to receive image data from the image transmission apparatus (110) by wireless communication and to display the image data;
wherein the image display apparatus (100) comprises:
an operation state processor (210) configured to:
in response to the image display apparatus (100) being turned on, transmit a first control signal for booting up the image transmission apparatus (110) to the image transmission apparatus (110) and
identify whether viewing information comprises information that an image was provided from the image transmission apparatus (110),
based on identifying the viewing information comprising information that an image was provided from the image transmission apparatus (110), control a communication interface (200) to transmit a request for a network connection to the image transmission apparatus (110) to use an image service provided by the image transmission apparatus, and
based on identifying the viewing information not comprising information that an image was provided from the image transmission apparatus (110), control the communication interface (200) to transmit a second control signal for changing a state of the booted image transmission apparatus (110) to a power saving state to the image transmission apparatus (110).

## Patentansprüche

1. Bildanzeigevorrichtung (100), die mit einer Bildübertragungsvorrichtung (110) durch drahtlose Kommunikation arbeitet, wobei die Bildanzeigevorrichtung (100) umfasst:
einen Speicher;
eine Kommunikationsschnittstelle (200); und einen Betriebszustandsprozessor (210), der dazu eingerichtet ist:
den Speicher zu steuern, um Anzeigeinformationen über ein von einem Benutzer angezeigtes Bild zu speichern, bevor die Bildanzeigevorrichtung (100) ausgeschaltet wird, und
als Reaktion auf das Einschalten der Bildanzeigevorrichtung (100) die Kommunikationsschnittstelle (200) zu steuern, um ein erstes Steuersignal zum Hochfahren der Bildübertragungsvorrichtung (110) an die Bildübertragungsvorrichtung (110) zu senden;
**dadurch gekennzeichnet, dass**:
der Betriebszustandsprozessor (210) dazu eingerichtet ist:
zu erkennen, ob die Anzeigeinformationen eine Information umfassen, dass ein Bild von der Bildübertragungsvorrichtung (110) bereitgestellt wurde,
basierend auf dem Erkennen, dass die Anzeigeinformationen die Information umfassen, dass ein Bild von der Bildübertragungsvorrichtung (110) bereitgestellt wurde, die Kommunikationsschnittstelle (200) zu steuern, um eine Anforderung für eine Netzwerkverbindung an die Bildübertragungsvorrichtung (110) zu senden, um einen durch die Bildübertragungsvorrichtung bereitgestellten Bilddienst zu verwenden, und
basierend auf dem Erkennen, dass die Anzeigeinformationen keine Information umfassen, dass ein Bild von der Bildübertragungsvorrichtung (110) bereitgestellt wurde, die Kommunikationsschnittstelle (200) zu steuern, um ein zweites Steuersignal zum Ändern eines Zustands der hochgefahrenen Bildübertragungsvorrichtung (110) in einen Energiesparzustand an die Bildübertragungsvorrichtung (110) zu senden.

2. Bildanzeigevorrichtung (100) nach Anspruch 1, wobei der Betriebszustandsprozessor (210) dazu eingerichtet ist, als Reaktion auf die Anzeigeinformationen, die eine Information umfassen, dass ein Bild von der Bildübertragungsvorrichtung (110) bereitgestellt wurde, ein Bild der Bildübertragungsvorrichtung (110) zu empfangen und zu verarbeiten.

3. Bildanzeigevorrichtung (100) nach Anspruch 2, wobei der Betriebszustandsprozessor (210) dazu eingerichtet ist, als Reaktion auf das Empfangen eines dritten Steuersignals von der Bildübertragungsvorrichtung (110) die Bildanzeigevorrichtung (100) einzuschalten und ein Bild der Bildübertragungsvorrichtung (110) zu empfangen und zu verarbeiten, wenn die Bildanzeigevorrichtung (100) ausgeschaltet ist.

4. Bildanzeigevorrichtung nach einem der Ansprüche 1 bis 3, ferner umfassend:
eine Anzeige (320), die dazu eingerichtet ist, ein durch die Bildübertragungsvorrichtung (110) bereitgestelltes Bild anzuzeigen oder ein über ein Kommunikationsnetzwerk bereitgestelltes Bild anzuzeigen,
wobei der Betriebszustandsprozessor (210) dazu eingerichtet ist, als Reaktion auf einen Anzeigewechselbefehl, der während der Anzeige eines Bildes der Bildübertragungsvorrichtung (110) empfangen wird, die Anzeige zu steuern, um das über das Kommunikationsnetzwerk bereitgestellte Bild anzuzeigen.

5. Verfahren zum Steuern einer Bildanzeigevorrichtung (100), die mit einer Bildübertragungsvorrichtung (110) durch drahtlose Kommunikation arbeitet, wobei das Verfahren umfasst:
Speichern von Anzeigeinformationen über ein von einem Benutzer angezeigtes Bild, bevor die Bildanzeigevorrichtung (100) ausgeschaltet wird;
als Reaktion auf das Einschalten der Bildanzeigevorrichtung (100) Senden eines ersten Steuersignals zum Hochfahren der Bildübertragungsvorrichtung (110) an die Bildübertragungsvorrichtung (110); und
**dadurch gekennzeichnet, dass** das Verfahren umfasst:
Erkennen, ob die Anzeigeinformationen eine Information umfassen, dass ein Bild von der Bildübertragungsvorrichtung (110) bereitgestellt wurde,
basierend auf dem Erkennen, dass die Anzeigeinformationen die Information umfassen, dass ein Bild von der Bildübertragungsvorrichtung (110) bereitgestellt wurde, Senden einer Anforderung für eine Netzwerkverbindung an die Bildübertragungsvorrichtung (110), um einen durch die Bildübertragungsvorrichtung bereitgestellten Bilddienst zu verwenden, und
basierend auf dem Erkennen, dass die Anzeigeinformationen keine Information umfassen, dass ein Bild von der Bildübertragungsvorrichtung (110) bereitgestellt wurde, Senden eines zweiten Steuersignals zum Ändern eines Zustands der hochgefahrenen Bildübertragungsvorrichtung (110) in einen Energiesparzustand an die Bildübertragungsvorrichtung (110) (S1110).

6. Verfahren nach Anspruch 5, ferner umfassend:
Empfangen und Verarbeiten eines von der Bildübertragungsvorrichtung (110) empfangenen Bildes durch die Bildanzeigevorrichtung (100) als Reaktion auf die Anzeigeinformationen eines Bildes, die eine Information umfassen, dass ein Bild von der Bildübertragungsvorrichtung (110) bereitgestellt wurde.

7. Verfahren nach Anspruch 6, ferner umfassend:
Empfangen eines Befehls zum Ändern der Anzeige in Bezug auf ein von der Bildübertragungsvorrichtung (110) empfangenes Bild,
wobei das Erhalten des zweiten Steuersignals das Erhalten des zweiten Steuersignals zum Ändern eines Zustands der Bildübertragungsvorrichtung (110) in den Energiesparzustand basierend auf dem empfangenen Benutzerbefehl umfasst.

8. Verfahren nach Anspruch 7, ferner umfassend:
Empfangen eines dritten Steuersignals durch die Bildanzeigevorrichtung (100), das von der Bildübertragungsvorrichtung (110) bereitgestellt wird, während die Bildanzeigevorrichtung (100) ausgeschaltet ist; und
Einschalten der Bildanzeigevorrichtung (100) basierend auf dem empfangenen dritten Steuersignal zum Empfangen und Verarbeiten eines Bildes der Bildübertragungsvorrichtung (110).

9. Bildverarbeitungssystem (90) mit einer Bildanzeigevorrichtung (100) in betrieblicher Verbindung mit einer Bildübertragungsvorrichtung (110), wobei die Bildübertragungsvorrichtung (110) dazu eingerichtet ist, Bilddaten an die Bildanzeigevorrichtung (100) durch drahtlose Kommunikation zu übertragen, und wobei die Bildanzeigevorrichtung (100) dazu eingerichtet ist, Bilddaten von der Bildübertragungsvorrichtung (110) durch drahtlose Kommunikation zu empfangen und die Bilddaten anzuzeigen;
wobei die Bildanzeigevorrichtung (100) umfasst:
einen Betriebszustandsprozessor (210), der dazu eingerichtet ist:
als Reaktion auf das Einschalten der Bildanzeigevorrichtung (100) ein erstes Steuersignal zum Hochfahren der Bildübertragungsvorrichtung (110) an die Bildübertragungsvorrichtung (110) zu senden und
zu erkennen, ob die Anzeigeinformationen eine Information umfassen, dass ein Bild von der Bildübertragungsvorrichtung (110) bereitgestellt wurde,
basierend auf dem Erkennen, dass die Anzeigeinformationen die Information umfassen, dass ein Bild von der Bildübertragungsvorrichtung (110) bereitgestellt wurde, eine Kommunikationsschnittstelle (200) zu steuern, um eine Anforderung für eine Netzwerkverbindung an die Bildübertragungsvorrichtung (110) zu senden, um einen durch die Bildübertragungsvorrichtung bereitgestellten Bilddienst zu verwenden, und
basierend auf dem Erkennen, dass die Anzeigeinformationen keine Information umfassen, dass ein Bild von der Bildübertragungsvorrichtung (110) bereitgestellt wurde, die Kommunikationsschnittstelle (200) zu steuern, um ein zweites Steuersignal zum Ändern eines Zustands der hochgefahrenen Bildübertragungsvorrichtung (110) in einen Energiesparzustand an die Bildübertragungsvorrichtung (110) zu senden.

## Revendications

1. Appareil d'affichage d'images (100) fonctionnant avec un appareil de transmission d'images (110) par communication sans fil, l'appareil d'affichage d'images (100) comprenant :
un dispositif de stockage ;
une interface de communication (200) ; et un processeur d'état de fonctionnement (210) configuré pour :
commander le dispositif de stockage pour stocker des informations de visualisation sur une image visualisée par un utilisateur avant que l'appareil d'affichage d'images (100) soit éteint, et
en réponse à l'allumage de l'appareil d'affichage d'images (100), commander l'interface de communication (200) pour transmettre un premier signal de commande destiné à démarrer l'appareil de transmission d'images (110) à l'appareil de transmission d'images (110) ;
**caractérisé en ce que** :
le processeur d'état de fonctionnement (210) est configuré pour :
identifier si les informations de visualisation comprennent ou non des informations indiquant qu'une image a été fournie depuis l'appareil de transmission d'images (110),
sur la base de l'identification que les informations de visualisation comprennent les informations indiquant qu'une image a été fournie depuis l'appareil de transmission d'images (110), commander l'interface de communication (200) pour transmettre une requête de connexion réseau à l'appareil de transmission d'images (110) pour utiliser un service d'images fourni par l'appareil de transmission d'images, et
sur la base de l'identification que les informations de visualisation ne comprennent pas d'informations indiquant qu'une image a été fournie depuis l'appareil de transmission d'images (110), commander l'interface de communication (200) pour transmettre un deuxième signal de commande destiné à faire passer un état de l'appareil de transmission d'images (110) démarré à un état d'économie d'énergie à l'appareil de transmission d'images (110).

2. Appareil d'affichage d'images (100) de la revendication 1 dans lequel, en réponse au fait que les informations de visualisation comprennent des informations indiquant qu'une image a été fournie depuis l'appareil de transmission d'images (110), le processeur d'état de fonctionnement (210) est configuré pour recevoir et traiter une image de l'appareil de transmission d'images (110).

3. Appareil d'affichage d'images (100) de la revendication 2, dans lequel le processeur d'état de fonctionnement (210) est configuré pour allumer l'appareil d'affichage d'images (100), et pour recevoir et traiter une image de l'appareil de transmission d'images (110) en réponse à la réception d'un troisième signal de commande provenant de l'appareil de transmission d'images (110) quand l'appareil d'affichage d'images (100) est éteint.

4. Appareil d'affichage d'images selon l'une quelconque des revendications 1 à 3, comprenant en outre :
un écran (320) configuré pour afficher une image fournie par l'appareil de transmission d'images (110) ou pour afficher une image fournie par le biais d'un réseau de communication,
dans lequel, en réponse à une commande de changement de visualisation reçue pendant l'affichage d'une image de l'appareil de transmission d'images (110), le processeur d'état de fonctionnement (210) est configuré pour commander l'écran pour afficher l'image fournie par le biais du réseau de communication.

5. Procédé de commande d'un appareil d'affichage d'images (100) fonctionnant avec un appareil de transmission d'images (110) par communication sans fil, le procédé comprenant :
le stockage d'informations de visualisation sur une image visualisée par un utilisateur avant que l'appareil d'affichage d'images (100) soit éteint ;
la transmission, en réponse à l'allumage de l'appareil d'affichage d'images (100), d'un premier signal de commande destiné à démarrer l'appareil de transmission d'images (110) à l'appareil de transmission d'images (110) ; et
**caractérisé en ce que** le procédé comprend :
l'identification que les informations de visualisation comprennent ou ne comprennent pas des informations indiquant qu'une image a été fournie depuis l'appareil de transmission d'images (110),
sur la base de l'identification que les informations de visualisation comprennent les informations indiquant qu'une image a été fournie depuis l'appareil de transmission d'images (110), la transmission d'une requête de connexion réseau à l'appareil de transmission d'images (110) pour utiliser un service d'images fourni par l'appareil de transmission d'images, et
sur la base de l'identification que les informations de visualisation ne comprennent pas d'informations indiquant qu'une image a été fournie depuis l'appareil de transmission d'images (110), la transmission d'un deuxième signal de commande destiné à faire passer un état de l'appareil de transmission d'images (110) démarré à un état d'économie d'énergie à l'appareil de transmission d'images (110) (S1110).

6. Procédé de la revendication 5, comprenant en outre :
la réception et le traitement, par l'appareil d'affichage d'images (100), d'une image reçue depuis l'appareil de transmission d'images (110) en réponse au fait que les informations de visualisation d'une image comprennent des informations indiquant qu'une image a été fournie depuis l'appareil de transmission d'images (110) .

7. Procédé de la revendication 6, comprenant en outre :
la réception d'une commande pour changer la visualisation par rapport à une image reçue depuis l'appareil de transmission d'images (110),
dans lequel l'obtention du deuxième signal de commande comprend l'obtention du deuxième signal de commande destiné à faire passer un état de l'appareil de transmission d'images (110) à l'état d'économie d'énergie sur la base de la commande d'utilisateur reçue.

8. Procédé de la revendication 7, comprenant en outre :
la réception, par l'appareil d'affichage d'images (100), d'un troisième signal de commande fourni par l'appareil de transmission d'images (110) pendant que l'appareil d'affichage d'images (100) est éteint ; et
l'allumage de l'appareil d'affichage d'images (100) sur la base du troisième signal de commande reçu pour recevoir et traiter une image de l'appareil de transmission d'images (110).

9. Système de traitement d'images (90) comportant un appareil d'affichage d'images (100) en communication opérationnelle avec un appareil de transmission d'images (110), l'appareil de transmission d'images (110) étant configuré pour transmettre des données d'image à l'appareil d'affichage d'images (100) par communication sans fil et l'appareil d'affichage d'images (100) étant configuré pour recevoir des données d'image depuis l'appareil de transmission d'images (110) par communication sans fil et pour afficher les données d'image ;
dans lequel l'appareil d'affichage d'images (100) comprend :
un processeur d'état de fonctionnement (210) configuré pour :
en réponse à l'allumage de l'appareil d'affichage d'images (100), transmettre un premier signal de commande destiné à démarrer l'appareil de transmission d'images (110) à l'appareil de transmission d'images (110) et
identifier si des informations de visualisation comprennent ou non des informations indiquant qu'une image a été fournie depuis l'appareil de transmission d'images (110),
sur la base de l'identification que les informations de visualisation comprennent des informations indiquant qu'une image a été fournie depuis l'appareil de transmission d'images (110), commander une interface de communication (200) pour transmettre une requête de connexion réseau à l'appareil de transmission d'images (110) pour utiliser un service d'images fourni par l'appareil de transmission d'images, et
sur la base de l'identification que les informations de visualisation ne comprennent pas d'informations indiquant qu'une image a été fournie depuis l'appareil de transmission d'images (110), commander l'interface de communication (200) pour transmettre un deuxième signal de commande destiné à faire passer un état de l'appareil de transmission d'images (110) démarré à un état d'économie d'énergie à l'appareil de transmission d'images (110).
